(19) Europäisches Patentamt
European Patent Office
Office européen des brevets

(11) EP 0 946 649 B1

(12) **EUROPÄISCHE PATENTSCHRIFT**

(45) Veröffentlichungstag und Bekanntmachung des Hinweises auf die Patenterteilung:
**25.07.2001 Patentblatt 2001/30**

(21) Anmeldenummer: **97952035.0**

(22) Anmeldetag: **04.12.1997**

(51) Int Cl.$^7$: **C08L 101/00**

(86) Internationale Anmeldenummer:
**PCT/EP97/06777**

(87) Internationale Veröffentlichungsnummer:
**WO 98/27164 (25.06.1998 Gazette 1998/25)**

# (54) FLAMMGESCHÜTZTE FORMMASSEN

FLAME-PROOFED MOLDING MATERIALS

MATIERES MOULABLES IGNIFUGES

(84) Benannte Vertragsstaaten:
**AT BE CH DE ES FI FR GB IE IT LI LU NL**

(30) Priorität: **19.12.1996 DE 19653042**

(43) Veröffentlichungstag der Anmeldung:
**06.10.1999 Patentblatt 1999/40**

(73) Patentinhaber: **BASF AKTIENGESELLSCHAFT**
**67056 Ludwigshafen (DE)**

(72) Erfinder:
- **GAREISS, Brigitte**
  **D-67271 Obersülzen (DE)**
- **DECKERS, Andreas**
  **D-55234 Flomborn (DE)**
- **KLATT, Martin**
  **D-68165 Mannheim (DE)**
- **WEBER, Wilhelm**
  **D-67435 Neustadt (DE)**

(56) Entgegenhaltungen:
**EP-A- 0 328 273** **EP-A- 0 629 665**
**DE-A- 3 722 156**

- **PATENT ABSTRACTS OF JAPAN vol. 096, no. 007, 31.Juli 1996 & JP 08 081598 A (SUMITOMO BAKELITE CO LTD), 26.März 1996,**

Bemerkungen:
Die Akte enthält technische Angaben, die nach dem Eingang der Anmeldung eingereicht wurden und die nicht in dieser Patentschrift enthalten sind.

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 0 946 649 B1

## Beschreibung

Die Erfindung betrifft thermoplastische Formmassen enthaltend

A) 10 bis 90 Gew.-% mindestens eines thermoplastischen Polymeren, verschieden von B)

B) 1 bis 20 Gew.-% eines carboxylgruppenhaltigen Polyethylens mit einem mittleren Molekulargewicht $M_n$ (Zahlenmittel) von 24 000 bis 100 000 g/mol,

C) 5 bis 60 Gew.-% eines halogenfreien Flammschutzmittels

D) 0 bis 70 Gew.-% weiterer Zusatzstoffe und Verarbeitungshilfsmittel,

wobei die Summe der Gewichtsprozente der Komponenten A) bis D) 100 % ergibt.

Weiterhin betrifft die Erfindung die Verwendung der erfindungsgemässen Formmassen zur Herstellung von Fasern, Folien und Formkörpern, sowie die hierbei erhältlichen Formkörper jeglicher Art.

Ethylencopolymere, welche funktionelle Gruppen unterschiedlicher Art tragen, sind als Schlagzähmodifier für Thermoplaste bekannt: für Polyester z.B. aus der US-4 879 328, DE-A 26 22 876 und EP-A 174 343; für Polyamide z.B. aus der DE-A 26 22 973 und DE-A 3 722 156.

Niedermolekulare Carboxylgruppen enthaltende Polyethylenwachse sind aus der DE-A 42 16 042 bekannt, welche die Flammschutzeigenschaften von unverstärkten Polyamiden durch spezielle Herstellverfahren verbessern.

Derartige niedermolekulare Polyethylenzusätze zeigen jedoch immer noch ein brennendes Abtropfen, welches für viele Anwendungen nicht akzeptabel ist.

Flammgeschützte Polyesterformmassen, welche unter anderem Ethylencopolymere enthalten sind aus der US-A 5 021 495 bekannt, wobei diese Formmassen ein halogenhaltiges Flammschutzmittel und einen Antimonsynergisten enthalten.

Halogenhaltige flammgeschützte Thermoplaste sind neben anderen Nachteilen toxikologisch bedenklich und werden in zunehmenden Masse durch halogenfreie flammgeschützte Thermoplaste ersetzt.

Wesentliche Anforderungen für derartige Flammschutzmittelsysteme sind insbesondere eine helle Eigenfarbe, ausreichende Temperaturstabilität bei der Einarbeitung in den Thermoplasten sowie der Erhalt der Wirksamkeit bei Zusatz von faserförmigen Füllstoffen (sog. Dochteffekt bei Glasfasern, welcher die Flammschutzeigenschaften negativ beeinflußt).

Neben rotem Phosphor enthaltenden Thermoplasten kommen hauptsächlich vier weitere halogenfreie Flammschutzmittel insbesondere in Betracht.

1. Anorganische Flammschutzmittel auf Basis von Hydroxiden oder Carbonaten, insbesondere des Magnesiums, welche in hohen Mengen eingesetzt werden müssen, um ausreichend wirksam zu sein;

2. Stickstoffhaltige Flammschutzmittel wie Melamincyanurat, welches meist nur in unverstärkten Thermoplasten ausreichenden Flammschutz zeigen;

3. Phosphorverbindungen, wie Triphenylphosphinoxid als Flammschutzmittel, die in vielen Thermoplasten den unerwünschten Nebeneffekt eines Weichmachers zeigen;

4. Ammoniumpolyphosphate oder Melaminphosphat, welche bei Temperaturen oberhalb von 200°C keine ausreichende Thermostabilität besitzen.

Der vorliegenden Erfindung lag daher die Aufgabe zugrunde, eine halogenfreie Flammschutzmittelkombination für Thermoplaste zur Verfügung zu stellen, welche eine ausreichende Krustenbildung und Verkohlen beim Entzünden zeigt und nicht brennend abtropft.

Demgemäß wurden die eingangs definierten Formmassen gefunden. Bevorzugte Ausführungsformen sind den Unteransprüchen zu entnehmen.

Überraschenderweise führt die Zugabe der erfindungsgemäßen Ethylencopolymeren, insbesondere niedermolekularen Copolymeren, in Kombination mit halogenfreien Flammschutzmitteln zu einem synergistischen Effekt der Flammschutzwirkung. Insbesondere glasfaserhaltige Thermoplaste zeigen kein brennendes Abtropfen mit der erfindungsgemäßen Kombination.

Durch die Kombination mit Ethylencopolymeren kann die Menge an halogenfreiem Flammschutzmittel zur Erzielung der Flammschutzklasse V-O gemäß UL 94 drastisch reduziert werden, wodurch sich Verarbeitbarkeit und

mechanische Eigenschaften sich verbessern.

Als Komponente A) enthalten die erfindungsgemäßen Formmassen 10 bis 90, vorzugsweise 20 bis 85 und insbesondere 30 bis 80 Gew.-% eines thermoplastischen Polymeren, verschieden von B).

Grundsätzlich zeigt sich der vorteilhafte Effekt bei den erfindungsgemäßen Formmassen bei Thermoplasten jeglicher Art. Eine Aufzählung geeigneter Thermoplaste findet sich beispielsweise im Kunststoff-Taschenbuch (Hrsg. Saechtling), Auflage 1989, wo auch Bezugsquellen genannt sind. Verfahren zur Herstellung solcher thermoplastischer Kunststoffe sind dem Fachmann an sich bekannt. Nachstehend seien einige bevorzugte Kunststoffarten etwas näher erläutert.

1. Polycarbonate und Polyester

Geeignete Polycarbonate (oft auch als aromatische Polyester bezeichnet) sind an sich bekannt. Sie sind z. B. entsprechend den Verfahren der DE-B-1 300 266 durch Grenzflächenpolykondensation oder gemäß dem Verfahren der DE-A-14 95 730 durch Umsetzung von Biphenylcarbonat mit Bisphenolen erhältlich. Bevorzugtes Bisphenol ist 2,2-Di(4-hydroxyphenyl)propan, im allgemeinen - wie auch im folgenden - als Bisphenol A bezeichnet.

Anstelle von Bisphenol A können auch andere aromatische Dihydroxyverbindungen verwendet werden, insbesondere 2,2-Di(4-hydroxyphenyl)pentan, 2,6-Dihydroxynaphthalin, 4,4'-Dihydroxydiphenylsulfon, 4,4'-Dihydroxydiphenylether, 4,4'-Dihydroxydiphenylsulfit, 4,4'-Dihydroxydiphenylmethan, 1,1-Di-(4-hydroxyphenyl)ethan oder 4,4-Dihydroxydiphenyl sowie Mischungen der vorgenannten Dihydroxyverbindungen.

Besonders bevorzugte Polycarbonate sind solche auf der Basis von Bisphenol A oder Bisphenol A zusammen mit bis zu 30 mol.-% der vorstehend genannten aromatischen Dihydroxyverbindungen.

Die relative Viskosität dieser Polycarbonate liegt im allgemeinen im Bereich von 1,1 bis 1,5, insbesondere 1,28 bis 1,4 (gemessen bei 25°C in einer 0,5 gew.-%igen Lösung in Dichlormethan).

Geeignete Polyester sind ebenfalls an sich bekannt und in der Literatur beschrieben. Sie enthalten einen aromatischen Ring in der Hauptkette, der von einer aromatischen Dicarbonsäure herrührt. Der aromatische Ring kann auch substituiert sein, z.B. durch Halogen wie Chlor und Brom oder durch $C_1$-$C_4$-Alkylgruppen wie Methyl-, Ethyl-, i- bzw. n-Propyl- und n-, i- bzw. tert.-Butyl-gruppen.

Die Polyester können durch Umsetzung von aromatischen Dicarbonsäuren, deren Estern oder anderer esterbildender Derivate derselben mit aliphatischen Dihydroxyverbindungen in an sich bekannter Weise hergestellt werden.

Als bevorzugte Dicarbonsäuren sind Naphthalindicarbonsäure, Terephthalsäure und Isophthalsäure oder deren Mischungen zu nennen. Bis zu 10 mol.-% der aromatischen Dicarbonsäuren können durch aliphatische oder cycloaliphatische Dicarbonsäuren wie Adipinsäure, Azelainsäure, Sebacinsäure, Dodecandisäuren und Cyclohexandicarbonsäuren ersetzt werden.

Von den aliphatischen Dihydroxyverbindungen werden Diole mit 2 bis 6 Kohlenstoffatomen, insbesondere 1,2-Ethandiol, 1,4-Butandiol, 1,6-Hexandiol, 1,4-Hexandiol, 1,4-Cyclohexandiol und Neopentylglykol oder deren Mischungen bevorzugt.

Als besonders bevorzugte Polyester sind Polyalkylenterephthalate, die sich von Alkandiolen mit 2 bis 6 C-Atomen ableiten, zu nennen. Von diesen werden insbesondere Polyethylenterephthalat, Polyethylennaphthalat und Polybutylenterephthalat bevorzugt.

Die Viskositätszahl der Polyester liegt im allgemeinen im Bereich von 60 bis 200 ml/g (gemessen in einer 0,5 gew.-%igen Lösung in einem Phenol/o-Dichlorbenzolgemisch (Gew.-Verh. 1:1 bei 25°C)).

2. Vinylaromatische Polymere

Das Molekulargewicht dieser an sich bekannten und im Handel erhältlichen Polymeren liegt im allgemeinen im Bereich von 1.500 bis 2.000.000, vorzugsweise im Bereich von 70.000 bis 1.000.000.

Nur stellvertretend seien hier vinylaromatische Polymere aus Styrol, Chlorstyrol, $\alpha$-Methylstyrol und p-Methylstyrol genannt; in untergeordneten Anteilen (vorzugsweise nicht mehr als 20, insbesondere nicht mehr als 8 Gew.-%), können auch Comonomere wie (Meth)acrylnitril oder (Meth)acrylsäureester am Aufbau beteiligt sein. Besonders bevorzugte vinylaromatische Polymere sind Polystyrol und schlagzäh modifiziertes Polystyrol. Es versteht sich, daß auch Mischungen dieser Polymeren eingesetzt werden können. Die Herstellung erfolgt vorzugsweise nach dem in der EP-A-302 485 beschriebenen Verfahren.

Bevorzugte ASA-Polymerisate sind aufgebaut aus einer Weich- oder Kautschukphase aus einem Pfropfpolymerisat aus:

$A_1$ 50 bis 90 Gew.-% einer Pfropfgrundlage auf Basis von

$A_{11}$ 95 bis 99,9 Gew.-% eines $C_2$-$C_{10}$-Alkylacrylats und

$A_{12}$ 0,1 bis 5 Gew.-% eines difunktionellen Monomeren mit zwei olefinischen, nicht konjugierten Doppelbindungen, und

$A_2$ 10 bis 50 Gew.-% einer Pfropfauflage aus

$A_{21}$ 20 bis 50 Gew.-% Styrol oder substituierten Styrolen der allgemeinen Formel I oder deren Mischungen, und

$A_{22}$ 10 bis 80 Gew.-% Acrylnitril, Methacrylnitril, Acrylsäureestern oder Methacrylsäureestern oder deren Mischungen,

in Mischung mit einer Hartmatrix auf Basis eines SAN-Copolymeren $A_3$) aus:

$A_{31}$ 50 bis 90, vorzugsweise 55 bis 90 und insbesondere 65 bis 85 Gew.-% Styrol und/oder substituierten Styrolen der allgemeinen Formel I und

$A_{32}$ 10 bis 50, vorzugsweise 10 bis 45 und insbesondere 15 bis 35 Gew.-% Acrylnitril und/oder Methacrylnitril.

Bei der Komponente $A_1$) handelt es sich um ein Elastomeres, welches eine Glasübergangstemperatur von unter -20, insbesondere unter -30°C aufweist.

Für die Herstellung des Elastomeren werden als Hauptmonomere $A_{11}$) Ester der Acrylsäure mit 2 bis 10 C-Atomen, insbesondere 4 bis 8 C-Atomen eingesetzt. Als besonders bevorzugte Monomere seien hier tert.-, iso- und n-Butylacrylat sowie 2-Ethylhexylacrylat genannt, von denen die beiden letztgenannten besonders bevorzugt werden.

Neben diesen Estern der Acrylsäure werden 0,1 bis 5, insbesondere 1 bis 4 Gew.-%, bezogen auf das Gesamtgewicht $A_{11}$ + $A_{12}$ eines polyfunktionellen Monomeren mit mindestens zwei olefinischen, nicht konjugierten Doppelbindungen eingesetzt. Von diesen werden difunktionelle Verbindungen, d.h. mit zwei nicht konjugierten Doppelbindungen bevorzugt verwendet. Beispielsweise seien hier Divinylbenzol, Diallylfumarat, Diallylphthalat, Triallylcyanurat, Triallylisocyanurat, Tricyclodecenylacrylat und Dihydrodicyclopentadienylacrylat genannt, von denen die beiden letzten besonders bevorzugt werden.

Verfahren zur Herstellung der Pfropfgrundlage $A_1$ sind an sich bekannt und z.B. in der DE-B 1 260 135 beschrieben. Entsprechende Produkte sind auch kommerziell im Handel erhältlich.

Als besonders vorteilhaft hat sich in einigen Fällen die Herstellung durch Emulsionspolymerisation erwiesen.

Die genauen Polymerisationsbedingungen, insbesondere Art, Dosierung und Menge des Emulgators werden vorzugsweise so gewählt, daß der Latex des Acrylsäureesters, der zumindest teilweise vernetzt ist, eine mittlere Teilchengröße (Gewichtsmittel $d_{50}$) im Bereich von etwa 200 bis 700, insbesondere von 250 bis 600 nm aufweist. Vorzugsweise hat der Latex eine enge Teilchengrößenverteilung, d.h. der Quotient

$$Q = \frac{d_{90} - d_{10}}{d_{50}}$$

ist vorzugsweise kleiner als 0,5, insbesondere kleiner als 0,35.

Der Anteil der Pfropfgrundlage $A_1$ am Pfropfpolymerisat $A_1$+$A_2$ beträgt 50 bis 90, vorzugsweise 55 bis 85 und insbesondere 60 bis 80 Gew.-%, bezogen auf das Gesamtgewicht von $A_1$+$A_2$.

Auf die Pfropfgrundlage $A_1$ ist eine Pfropfhülle $A_2$ aufgepfropft, die durch Copolymerisation von

$A_{21}$ 20 bis 90, vorzugsweise 30 bis 90 und insbesondere 30 bis 80 Gew.-% Styrol oder substituierten Styrolen der allgemeinen Formel

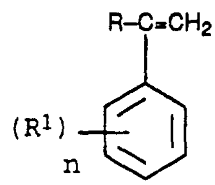

wobei R ein Alkylrest mit 1 bis 8 C-Atomen, Wasserstoffatom oder Halogenatom und $R^1$ ein Alkylrest mit 1 bis 8 C-Atomen oder Halogenatom darstellen und n den Wert 0, 1, 2 oder 3 hat, und

$A_{22}$ 10 bis 80, vorzugsweise 10 bis 70 und insbesondere 20 bis 70 Gew.-% Acrylnitril, Methacrylnitril, Acrylsäureestern oder Methacrylsäureestern oder deren Mischungen erhältlich ist.

Beispiele für substituierte Styrole sind α-Methylstyrol, p-Methylstyrol, p-Chlorstyrol und p-Chlor-α-Methylstyrol, wovon Styrol und α-Methylstyrol bevorzugt werden.

Bevorzugte Acryl- bzw. Methacrylsäureester sind solche, deren Homopolymere bzw. Copolymerisate mit den anderen Monomeren der Komponente $A_{22}$) Glasübergangstemperaturen von mehr als 20°C aufweisen; prinzipiell können jedoch auch andere Acrylsäureester eingesetzt werden, vorzugsweise in solchen Mengen, so daß sich insgesamt für die Komponente $A_2$ eine Glasübergangstemperatur $T_g$ oberhalb 20°C ergibt.

Besonders bevorzugt werden Ester der Acryl- oder Methacrylsäure mit $C_1$-$C_8$-Alkoholen und Epoxygruppen enthaltende Ester wie Glycidylacrylat bzw. Glycidylmethacrylat. Als ganz besonders bevorzugte Beispiele seien Methylmethacrylat, t-Butylmethacrylat, Glycidylmethacrylat und n-Butylacrylat genannt, wobei letzterer aufgrund seiner Eigenschaft, Polymerisate mit sehr niedriger $T_g$ zu bilden, vorzugsweise in nicht zu hohem Anteil eingesetzt wird.

Die Pfropfhülle $A_2$) kann in einem oder in mehreren, z.B. zwei oder drei, Verfahrensschritten hergestellt werden, die Bruttozusammensetzung bleibt davon unberührt.

Vorzugsweise wird die Pfropfhülle in Emulsion hergestellt, wie dies z.B. in der DE-PS 12 60 135, DE-OS 32 27 555, DE-OS 31 49 357 und DE-OS 34 14 118 beschrieben ist.

Je nach den gewählten Bedingungen entsteht bei der Pfropfmischpolymerisation ein bestimmter Anteil an freien Copolymerisaten von Styrol bzw. substituierten Styrolderivaten und (Meth)Acrylnitril bzw. (Meth)Acrylsäureestern.

Das Pfropfmischpolymerisat $A_1 + A_2$ weist im allgemeinen eine mittlere Teilchengröße von 100 bis 1.000 nm, im besonderen von 200 bis 700 nm, ($d_{50}$-Gewichtsmittelwert) auf. Die Bedingungen bei der Herstellung des Elastomeren $A_1$) und bei der Pfropfung werden daher vorzugsweise so gewählt, daß Teilchengrößen in diesem Bereich resultieren. Maßnahmen hierzu sind bekannt und z.B. in der DE-PS 1 260 135 und der DE-OS 28 26 925 sowie in Journal of Applied Polymer Science, Vol. 9 (1965), S. 2929 bis 2938 beschrieben. Die Teilchenvergrößerung des Latex des Elastomeren kann z.B. mittels Agglomeration bewerkstelligt werden.

zum Pfropfpolymerisat ($A_1$+$A_2$) zählen im Rahmen dieser Erfindung auch die bei der Pfropfmischpolymerisation zur Herstellung der Komponente $A_2$) entstehenden freien, nicht gepfropften Homo- und Copolymerisate.

Nachstehend seien einige bevorzugte Pfropfpolymerisate angeführt:

1: 60 Gew.-% Pfropfgrundlage $A_1$ aus

$A_{11}$ 98 Gew.-% n-Butylacrylat und
$A_{12}$ 2 Gew.-% Dihydrodicyclopentadienylacrylat und
40 Gew.-% Pfropfhülle $A_2$ aus
$A_{21}$ 75 Gew.-% Styrol und
$A_{22}$ 25 Gew.-% Acrylnitril

2: Pfropfgrundlage wie bei 1 mit 5 Gew.-% einer ersten Pfropfhülle aus Styrol und

35 Gew.-% einer zweiten Pfropfstufe aus
$A_{21}$ 75 Gew.-% Styrol und
$A_{22}$ 25 Gew.-% Acrylnitril

3: Pfropfgrundlage wie bei 1 mit 13 Gew.-% einer ersten Pfropfstufe aus Styrol und 27 Gew.-% einer zweiten Pfropfstufe aus Styrol und Acrylnitril im Gewichtsverhältnis 3:1

Die als Komponente $A_3$) enthaltenen Produkte können z.B. nach dem in den DE-AS 10 01 001 und DE-AS 10 03 436 beschriebenen Verfahren hergestellt werden. Auch im Handel sind solche Copolymere erhältlich. Vorzugsweise liegt der durch Lichtstreuung bestimmte Gewichtsmittelwert des Molekulargewichts im Bereich von 50.000 bis 500.000, insbesondere von 100.000 bis 250.000.

Das Gewichtsverhältnis von ($A_1 + A_2$):$A_3$ liegt im Bereich von 1:2,5 bis 2,5:1, vorzugsweise von 1:2 bis 2:1 und insbesondere von 1:1,5 bis 1,5:1.

Geeignete SAN-Polymere als Komponente A) sind vorstehend (siehe $A_{31}$ und $A_{32}$) beschrieben.

Die Viskositätszahl der SAN-Polymerisate, gemessen gemäß DIN 53 727 als 0,5 gew.-%ige Lösung in Dimethylformamid bei 23°C liegt im allgemeinen im Bereich von 40 bis 100, vorzugsweise 50 bis 80 ml/g.

ABS-Polymere als Polymer (A) in den erfindungsgemäßen mehrphasigen Polymermischungen weisen den

gleichen Aufbau wie vorstehend für ASA-Polymere beschrieben auf. Anstelle des Acrylatkautschukes $A_1$) der Pfropfgrundlage beim ASA-Polymer werden üblicherweise konjugierte Diene, eingesetzt, so daß sich für die Pfropfgrundlage $A_4$ vorzugsweise folgende Zusammensetzung ergibt:

$A_{41}$ 70 bis 100 Gew.-% eines konjugierten Diens und
$A_{42}$ 0 bis 30 Gew.-% eines difunktionellen Monomeren mit zwei olefinischen nicht-konjugierten Doppelbindungen

Pfropfauflage $A_2$ und die Hartmatrix des SAN-Copolymeren $A_3$) bleiben in der Zusammensetzung unverändert. Derartige Produkte sind im Handel erhältlich. Die Herstellverfahren sind dem Fachmann bekannt, so daß sich weitere Angaben hierzu erübrigen.
Das Gewichtsverhältnis von ($A_4$ + $A_2$):$A_3$ liegt im Bereich von 3:1 bis 1:3, vorzugsweise von 2:1 bis 1:2.
Besonders bevorzugte Zusammensetzungen der erfindungsgemäßen Formmassen enthalten als Komponente A) eine Mischung aus:

| | | |
|---|---|---|
| $A_1$) | 10 bis 90 Gew.-% | eines Polybutylenterephthalates |
| $A_2$) | 0 bis 40 Gew.-% | eines Polyethylenterephthalates |
| $A_3$) | 1 bis 40 Gew.-% | eines ASA- oder ABS-Polymeren oder deren Mischungen |

Derartige Produkte sind unter dem Warenzeichen Ultradur® S (ehemals Ultrablend® S) von der BASF Aktiengesellschaft erhältlich.
Weitere bevorzugte Zusammensetzungen der Komponente A) enthalten

| | | |
|---|---|---|
| $A_1$) | 10 bis 90 Gew.-% | eines Polycarbonates |
| $A_2$) | 0 bis 40 Gew.-% | eines Polyesters, vorzugsweise Polybutylenterephthalat, |
| $A_3$ | 1 bis 40 Gew.-% | eines ASA- oder ABS-Polymeren oder deren Mischungen. |

Derartige Produkte sind unter dem Warenzeichen Terblend® der BASF AG erhältlich.

3. Polyamide

Die Polyamide der erfindungsgemäßen Formmassen weisen im allgemeinen eine Viskositätszahl von 90 bis 350, vorzugsweise 110 bis 240 ml/g auf bestimmt in einer 0,5 gew.-%-igen Lösung in 96 gew.%iger Schwefelsäure bei 25°C gemäß ISO 307 auf.
Halbkristalline oder amorphe Harze mit einem Molekulargewicht (Gewichtsmittelwert) von mindestens 5.000, wie sie z.B. in den amerikanischen Patentschriften 2 071 250, 2 071 251, 2 130 523, 2 130 948, 2 241 322, 2 312 966, 2 512 606 und 3 393 210 beschrieben werden, sind bevorzugt.
Beispiele hierfür sind Polyamide, die sich von Lactamen mit 7 bis 13 Ringgliedern ableiten, wie Polycaprolactam, Polycapryllactam und Polylaurinlactam sowie Polyamide, die durch Umsetzung von Dicarbonsäuren mit Diaminen erhalten werden.
Als Dicarbonsäuren sind Alkandicarbonsäuren mit 6 bis 12, insbesondere 6 bis 10 Kohlenstoffatomen und aromatische Dicarbonsäuren einsetzbar. Hier seien nur Adipinsäure, Azelainsäure, Sebacinsäure, Dodecandisäure und Terephthal- und/oder Isophthalsäure als Säuren genannt.
Als Diamine eignen sich besonders Alkandiamine mit 6 bis 12, insbesondere 6 bis 8 Kohlenstoffatomen sowie m-Xylylendiamin, Di-(4-aminophenyl)methan, Di-(4-aminocyclohexyl)-methan, 2,2-Di-(4-aminophenyl)-propan oder 2,2-Di-(4-aminocyclohexyl)-propan.
Bevorzugte Polyamide sind Polyhexamethylenadipinsäureamid, Polyhexamethylensebacinsäureamid und Polycaprolactam sowie Copolyamide 6/66, insbesondere mit einem Anteil von 5 bis 95 Gew.-% an Caprolactam-Einheiten.
Außerdem seien auch noch Polyamide erwähnt, die z.B. durch Kondensation von 1,4-Diaminobutan mit Adipinsäure unter erhöhter Temperatur erhältlich sind (Polyamid-4,6). Herstellungsverfahren für Polyamide dieser Struktur sind z.B. in den EP-A 38 094, EP-A 38 582 und EP-A 39 524 beschrieben.
Weiterhin sind Polyamide, die durch Copolymerisation zweier oder mehrerer der vorgenannten Monomeren erhältlich sind, oder Mischungen mehrerer Polyamide geeignet, wobei das Mischungsverhältnis beliebig ist.
Weiterhin haben sich solche teilaromatischen Copolyamide wie PA 6/6T und PA 66/6T als besonders vorteilhaft erwiesen, deren Triamingehalt weniger als 0,5, vorzugsweise weniger als 0,3 Gew.-% beträgt (siehe EP-A 299 444).
Die Herstellung der bevorzugten teilaromatischen Copolyamide mit niedrigem Triamingehalt kann nach den

in den EP-A 129 195 und 129 196 beschriebenen Verfahren erfolgen.

4. Polyphenylenether

Geeignete Polyphenylenether weisen im allgemeinen ein Molekulargewicht (Gewichtsmittelwert) im Bereich von 10 000 bis 80 000, vorzugsweise von 20 000 bis 60 000 und insbesondere von 40 000 bis 55 000 auf.

Die Molekulargewichtsverteilung wird im allgemeinen mittels Gelpermeationschromatographie (GPC) bestimmt. Hierzu werden PPE-Proben in THF unter Druck bei 110°C gelöst. Bei Raumtemperatur wird mit THF als Elutionsmittel 0,16 ml einer 0,25 %igen Lösung auf geeignete Trennsäulen injiziert. Die Detektion erfolgt allgemein mit einem UV-Detektor. Die Trennsäulen werden zweckmäßig mit PPE-Proben bekannter Molekulargewichtsverteilung geeicht.

Dies entspricht einer reduzierten spezifischen Viskosität $\eta_{red}$ von 0,2 bis 0,9 dl/g, vorzugsweise von 0,35 bis 0,8 und insbesondere 0,45 bis 0,6, gemessen in einer 0,5 gew.%igen Lösung in Chloroform bei 25°C.

Die unmodifizierten Polyphenylenether $a_1$) sind an sich bekannt und werden vorzugsweise durch oxidative Kupplung von in o-Position disubstituierten Phenolen hergestellt.

Als Beispiele für Substituenten sind Halogenatome wie Chlor oder Brom und Alkylreste mit 1 bis 4 Kohlenstoffatomen, die vorzugsweise kein $\alpha$-ständiges tertiäres Wasserstoffatom aufweisen, z.B. Methyl-, Ethyl-, Propyl- oder Butylreste zu nennen. Die Alkylreste können wiederum durch Halogenatome wie Chlor oder Brom oder durch eine Hydroxylgruppe substituiert sein. Weitere Beispiele möglicher Substituenten sind Alkoxireste, vorzugsweise mit bis zu 4 Kohlenstoffatomen oder gegebenenfalls durch Halogenatome und/ oder Alkylgruppen substituierte Phenylreste. Ebenfalls geeignet sind Copolymere verschiedener Phenole wie z.B. Copolymere von 2,6-Dimethylphenol und 2,3,6-Trimethylphenol. Selbstverständlich können auch Gemische verschiedener Polyphenylenether eingesetzt werden.

Die als Komponente $a_1$) verwendeten Polyphenylenether können gegebenenfalls verfahrensbedingte Fehlstellen enthalten, die beispielsweise bei White et al., Macromolecules 23, 1318-1329 (1990) beschrieben sind.

Vorzugsweise werden solche Polyphenylenether eingesetzt, die mit vinylaromatischen Polymeren verträglich, d.h. ganz oder weitestgehend in diesen Polymeren löslich sind (vgl. A. Noshay, Block Copolymers, S. 8 bis 10, Academic Press, 1977 und O. Olabisi, Polymer-Polymer Miscibility, 1979, S. 117 bis 189).

Beispiele für Polyphenylenether sind Poly(2,6-dilauryl-1,4-phenylen)ether, Poly(2,6-diphenyl-1,4-phenylen) ether, Poly(2,6-dimethoxi-1,4-phenylen)ether, Poly(2,6-Diethoxi-1,4-phenylen)ether, Poly(2-methoxi-6-ethoxi-1,4-phenylen)ether, Poly(2-ethyl-6-stearyloxi-1,4-phenylen)ether, Poly(2,6-dichlor-1,4-phenylen)ether, Poly(2-methyl-6-phenyl-1,4-phenylen)ether, Poly(2,6-dibenzyl-1,4-phenylen)ether, Poly(2-ethoxi-1,4-phenylen)ether, Poly(2-chlor-1,4-phenylen)ether, Poly(2,5-dibrom-1,4-phenylen)ether. Bevorzugt werden Polyphenylenether eingesetzt, bei denen die Substituenten Alkylreste mit 1 bis 4 Kohlenstoffatomen sind, wie Poly(2,6-dimethyl-1,4-phenylen(ether, Poly (2,6-diethyl-1,4-phenylen)ether, Poly(2-methyl-6-ethyl-1,4-phenylen)ether, Poly(2-methyl-6-propyl-1,4-phenylen) ether, Poly(2,6-dipropyl-1,4-phenylen)ether und Poly(2-ethyl-6-propyl-1,4-phenylen)ether.

Weiterhin sind Pfropfcopolymere aus Polyphenylenether und vinylaromatischen Polymeren wie Styrol, $\alpha$-Methylstyrol, Vinyltoluol und Chlorstyrol geeignet.

Funktionalisierte oder modifizierte Polyphenylenether sind an sich bekannt, z.B. aus WO-A 86/02086, WO-A 87/00540, EP-A-222 246, EP-A-223 116 und EP-A-254 048 und werden bevorzugt für Mischungen mit PA oder Polyester eingesetzt.

Üblicherweise wird ein unmodifizierter Polyphenylenether $a_1$) durch Einbau mindestens einer Carbonyl-, Carbonsäure-, Säureanhydrid-, Säureamid-, Säureimid-, Carbonsäureester-, Carboxylat-, Amino-, Hydroxyl-, Epoxi-, Oxazolin-, Urethan-, Harnstoff-, Lactam- oder Halogenbenzylgruppe modifiziert, so daß eine hinreichende Verträglichkeit z.B. mit dem Polyamid gewährleistet ist.

Die Modifizierung wird im allgemeinen durch Umsetzung eines unmodifizierten Polyphenylenethers $a_1$) mit einem Modifiziermittel, das mindestens eine der oben genannten Gruppen und mindestens eine C-C-Doppel- oder C-C-Dreifachbindung enthält, in Lösung (WO-A 86/2086), in wäßriger Dispersion, in einem Gasphasenverfahren (EP-A-25 200) oder in der Schmelze gegebenenfalls in Gegenwart von geeigneten vinylaromatischen Polymeren oder Schlagzähmodifiern durchgeführt, wobei wahlweise Radikalstarter zugegen sein können.

Geeignete Modifiziermittel ($a_3$) sind beispielsweise Maleinsäure, Methylmaleinsäure, Itaconsäure, Tetrahydrophthalsäure, deren Anhydride und Imide, Fumarsäure, die Mono- und Diester dieser Säuren, z.B. von $C_1$- und $C_2$- bis $C_8$-Alkanolen ($a_{31}$), die Mono- oder Diamide dieser Säuren wie N-Phenylmaleinimid (Monomere $a_{32}$), Maleinhydrazid. Weiterhin seien beispielsweise N-Vinylpyrrolidon und (Meth)acryloylcaprolactam ($a_{33}$) genannt.

Bevorzugt wird in den erfindungsgemäßen Formmassen als Komponente A) ein modifizierter Polyphenylenether eingesetzt, der durch Umsetzen von

$a_1$) 70 bis 99,95, bevorzugt 76,5 bis 99,94 Gew.-% eines unmodifizierten Polyphenylenethers,

$a_2$) 0 bis 25, bevorzugt 0 bis 20 Gew.-% eines vinylaromatischen Polymeren,

$a_3$) 0,05 bis 5, bevorzugt 0,05 bis 2,5 Gew.-% mindestens einer Verbindung aus der Gruppe gebildet aus

$a_{31}$) einer $\alpha,\beta$-ungesättigten Dicarbonylverbindung,
$a_{32}$) einem Amid-Gruppen enthaltenden Monomeren mit einer polymerisierbaren Doppelbindung und
$a_{33}$) einem Lactam-Gruppen enthaltenden Monomeren mit einer polymerisierbaren Doppelbindung,

$a_4$) 0 bis 5, bevorzugt 0,01 bis 0,09 Gew.-% eines Radikalstarters,

wobei sich die Gewichtsprozente auf die Summe von $a_1$) bis $a_4$) beziehen, im Verlaufe von 0,5 bis 15 Minuten bei 240 bis 375°C in geeigneten Misch- und Knetaggregaten wie Zweischneckenextrudern erhältlich ist.

Das vinylaromatische Polymer $a_2$) soll vorzugsweise mit dem eingesetzten Polyphenylenether verträglich sein, wie vorstehend unter 2. beschrieben.

Beispiele für bevorzugte, mit Polyphenylenethern verträgliche vinylaromatische Polymere sind der bereits erwähnten Monografie von Olabisi, S. 224 bis 230 und 245 zu entnehmen.

Als Radikalstarter $a_4$) seien genannt:

Di-(2,4-dichlorbenzoyl)peroxid, tert.-Butylperoxid, Di-(3,5,5-trimethylhexanoyl)peroxid, Dilauroylperoxid, Didecanoylperoxid, Dipropionylperoxid, Dibenzoylperoxid, tert.-Butylperoxy-2-ethylhexoat, tert.-Butylperoxydiethylacetat, tert.-Butylperoxyisobutyrat, 1,1-Di-tert.-butylperoxy-3,3,5-trimethylcyclohexan, tert.-Butylperoxyisopropylcarbonat, tert.-Butylperoxy-3,3,5-trimethylhexoat, tert.-Butylperacetat, tert.-Butylperbenzoat, 4,4-Di-tert.-butylperoxyvaleriansäure-butylester, 2,2-Di-tert.-butylperoxybutan, Dicumylperoxid, tert.-Butylcumylperoxid, 1,3-Di-(tert.-butylperoxyisopropyl)benzol und Di-tert.-butylperoxid. Genannt seien ebenfalls organische Hydroperoxide wie Di-isopropylbenzolmonohydroperoxid, Cumolhydroperoxid, tert.-Butylhydroperoxid, p-Menthylhydroperoxid und Pinanhyroperoxid sowie hochverzweigte Alkane der allgemeinen Struktur

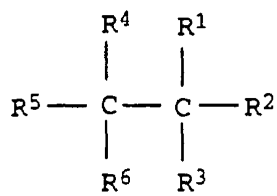

wobei $R^1$ bis $R^6$ Alkylgruppen mit 1 bis 8 C-Atomen, Alkoxygruppen mit 1 bis 8 C-Atomen, Arylgruppen wie Phenyl, Naphthyl oder 5-oder 6-gliedrige Heterocyclen mit einem $\pi$-Elektronensystem und Stickstoff, Sauerstoff oder Schwefel als Heteroatomen darstellen. Die Substituenten $R^1$ bis $R^6$ können ihrerseits funktionelle Gruppen als Substituenten enthalten, wie Carboxyl-, Carboxylderivat-, Hydroxyl-, Amino-, Thiol- oder Epoxidgruppen. Beispiele sind 2,3-Dimethyl-2,3-diphenylbutan, 3,4-Dimethyl-3,4-diphenylhexan und 2,2,3,3-Tetraphenylbutan.

Besonders bevorzugte Polyphenylenether A) in den erfindungsgemäßen Formmassen werden durch Modifizierung mit Maleinsäure, Maleinsäureanhydrid und Fumarsäure erhalten. Derartige Polyphenylenether weisen vorzugsweise eine Säurezahl von 1,8 bis 3,2, insbesondere von 2,0 bis 3,0 auf.

Die Säurezahl ist ein Maß für den Modifizierungsgrad des Polyphenylenethers und wird im allgemeinen durch Titration mit Basen unter Inertgasbedingungen bestimmt.

Die Säurezahl entspricht allgemein der Menge an Base in mg, welche zur Neutralisation von 1 g eines derart säuremodifizierten Polyphenylenethers B) benötigt wird (nach DIN 53 402).

Als Komponente B) enthalten die erfindungsgemäßen Formmassen 1 bis 20, vorzugsweise 1 bis 15, insbesondere 1 bis 10 Gew.-% eines carboxylgruppenhaltigen Polyethylens mit einem mittleren Molekulargewicht $M_n$ (Zahlenmittel) von 24 000 bis 100 000, vorzugsweise 25 000 bis 80 000 und insbesondere 50 000 bis 70 000 g/mol.

Das Molekulargewicht wird üblicherweise durch GPC (Gelpermeationschromatographie) mit HDPE-Standard bestimmt.

Der Melt-Flow-Index (MFI) beträgt vorzugsweise von 1 bis 100, bevorzugt von 5 bis 50, insbesondere von 5 bis 20 und ganz besonders von 10 bis 15 g/10 min (bei 160°C/0,325 kg) Belastung gemäß DIN 53 735.

Bei den carboxylgruppenhaltigen Polyethylenen kann es sich um Copolymere von Ethylen mit $\alpha,\beta$-ungesättigten Carbonsäuren handeln oder auch um Polyethylene auf die Carbonsäuren aufgepropft werden.

Derartige Polyethylene können nach dem Hochdruckverfahren hergestellt werden (siehe Ullmanns Enzyklopädie der technischen Chemie, 4. Auflage, Bd. 15, S. 428).

Bevorzugte Zusammensetzungen der Komponente B) sind aus 10 bis 50, vorzugsweise 15 bis 35 Gew.-%

carboxylgruppenhaltigen Verbindungen mit 50 bis 90, vorzugsweise 65 bis 85 Gew.-% Ethylen aufgebaut.

Bevorzugte Komponenten B), welche allein oder in Mischungen eingesetzt werden können, sind Copolymere aus Ethylen und einer α,β-ungesättigten Carbonsäure der allgemeinen Formel I

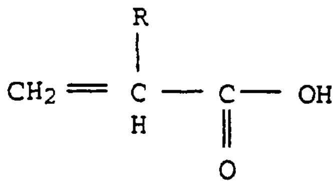

I

wobei R Wasserstoff oder einen Alkylrest mit 1 bis 5 C-Atomen bedeutet, wobei Wasserstoff und der Methylrest bevorzugt sind.

Verfahren zur Herstellung der Ethylen-AS-Copolymere sind an sich bekannt.

Die Polymerisation kann sowohl in einem gerührten Autoklaven als auch in einem kontinuierlich durchflossenen Rohrreaktor durchgeführt werden.

Zur Polymerisation wird dem Reaktor üblicherweise ein komprimiertes Gasgemisch der Monomere zugeführt. In die Einlaßstelle(n) dosiert man gleichzeitig geeignete Radikalbildner, die die radikalische Polymerisation starten. Derartige Initiatoren können organische Peroxide aber auch Luft bzw. Sauerstoff sein.

Durch Anpassung der Reaktionsbedingungen (Initiator, Druck, Gaseingangstemperaturen und Molgewichtsregler) werden in der Regel Comonomergehalt und Molgewicht eingestellt. Die Reaktionstemperatur beträgt in der Regel ca. 180 bis 330°C; der Druck liegt in der Regel bei 500 bis 4 000 bar. Der bevorzugt verwendete Reaktortyp ist der gerührte Autoklav, der eine gleichmäßige Reaktionsführung gewährleistet.

Als Komponente C) enthalten die erfindungsgemäßen Formmassen 5 bis 60, vorzugsweise 10 bis 50 und insbesondere 15 bis 45 Gew.-% eines halogenfreien Flammschutzmittels.

Die im Handel erhältlichen Magnesiumhydroxidprodukte sind plättchenförmige Feststoffe und weisen im allgemeinen eine spezifische Oberfläche, bestimmt nach der BET Methode gemäß DIN 66 131 im Bereich von 5 bis 100 $m^2/g$, bevorzugt von 5 bis 20 und insbesondere von 8 bis 12 $m^2/g$ auf. Die mittlere Teilchengröße beträgt im allgemeinen von 0,4 bis 20 μm, bevorzugt von 0,5 bis 2 μm und insbesondere von 0,8 bis 1,5 μm.

Herstellverfahren sind dem Fachmann bekannt, so daß weitere Einzelheiten sich erübrigen.

Bevorzugt sind als Flammschutzmittel in den erfindungsgemäßen Formmassen Magnesiumhydroxide, welche mit einer Silanverbindung oberflächlich vorbehandelt sind.

Durch die Silanisierung kann mit einer geringeren Menge $Mg(OH)_2$ die gewünschte V-O Einstufung gemäß UL 94 erreicht werden. Zusätzlich lassen sich günstigere mechanischen Eigenschaften (insbesondere die Schlagzähigkeit) der Formkörper erzielen.

Geeignete Silanverbindungen sind solche der allgemeinen Formel III

$$(X\text{-}CH_2)_n)_K\text{-}Si\text{-}(O\text{-}C_mH_{2m+1})_{4\text{-}K} \qquad \text{III}$$

in der die Substituenten folgende Bedeutung haben:

X $NH_2$-;

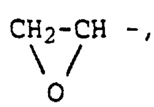

HO-,

n eine ganze Zahl von 2 bis 10, bevorzugt 3 bis 4

m eine ganze Zahl von 1 bis 5, bevorzugt 1 bis 2

k eine ganze Zahl von 1 bis 3, bevorzugt 1

Bevorzugte Silanverbindungen sind Aminopropyltrimethoxysilan, Aminobutyltrimethoxysilan, Aminopropyltriethoxysilan, Aminobutyltriethoxysilan sowie die entsprechenden Silane, welche als Substituent X eine Glycidylgruppe enthalten.

Die Silanverbindungen werden im allgemeinen in Mengen von 0,05 bis 5, vorzugsweise 0,5 bis 1,5 und insbesondere 0,8 bis 1 Gew.-% (bezogen auf C) zur Oberflächenbeschichtung eingesetzt.

Bevorzugtes Flammschutzmittel (C) ist elementarer roter Phosphor, insbesondere in Kombination mit glasfaserverstärkten Formmassen, der in unbehandelter Form eingesetzt werden kann.

Besonders eignen sich jedoch Zubereitungen, in denen der Phosphor oberflächlich mit niedermolekularen flüssigen Substanzen wie Silikonöl, Paraffinöl oder Estern der Phthalsäure oder Adipinsäure oder mit polymeren oder oligomeren Verbindungen, z.B. mit Phenolharzen oder Aminoplasten sowie Polyurethanen beschichtet sind.

Außerdem sind Konzentrate von rotem Phosphor, z.B. in einem Polyamid oder Elastomeren als Flammschutzmittel geeignet. Insbesondere eignen sich Polyolefinhomo- und -copolymere als Konzentratpolymere. Jedoch sollte der Anteil des Konzentratpolymeren nicht mehr als 35 Gew.-% bezogen auf das Gewicht der Komponenten A) und B) in der erfindungsgemäßen Formmasse betragen.

Die mittlere Teilchengröße ($d_{50}$) der in den Formmassen verteilten Phosphorpartikel liegt bevorzugt im Bereich von 0,0001 bis 0,5 mm; insbesondere von 0,001 bis 0,2 mm.

Bei der Komponente C) handelt es sich um organische und anorganische Phosphor enthaltende Verbindungen, in denen der Phosphor die Wertigkeitsstufe -3 bis +5 besitzt. Unter der Wertigkeitsstufe soll der Begriff "Oxidationsstufe" verstanden werden, wie er im Lehrbuch der Anorganischen Chemie von A.F. Hollemann und E. Wiberg, Walter des Gruyter und Co. (1964, 57. bis 70. Auflage), Seite 166 bis 177, wiedergegeben ist. Phosphorverbindungen der Wertigkeitsstufen -3 bis +5 leiten sich von Phosphin (-3), Diphosphin (-2), Phosphinoxid (-1), elementarem Phosphor (+0), hypophosphoriger Säure (+1), phosphoriger Säure (+3), Hypodiphosphorsäure (+4) und Phosphorsäure (+5) ab.

Aus der grossen Zahl von phosphorhaltigen Verbindungen seien nur einige Beispiele erwähnt.

Beispiele für Phosphorverbindungen der Phosphin-Klasse, die die Wertigkeitsstufe -3 aufweisen, sind aromatische Phosphine, wie Triphenylphosphin, Tritolylphosphin, Trinonylphosphin, Trinaphthylphosphin u.a.. Besonders geeignet ist Triphenylphosphin.

Beispiele für Phosphorverbindungen der Diphosphinklasse, die die Wertigkeitsstufe -2 aufweisen, sind Tetraphenyldiphosphin, Tetranaphthyldiphosphin u.a.. Besonders geeignet ist Tetranaphthyldiphosphin.

Phosphorverbindungen der Wertigkeitsstufe -1 leiten sich vom Phosphinoxid ab. Beispiele sind Triphenylphosphinoxid, Tritolylphosphinoxid. Trinonylphosphinoxid, Trinaphthylphosphinoxid. Bevorzugt ist Triphenylphosphinoxid.

Phosphor der Wertigkeitsstufe ±0 ist der elementare Phosphor, wie vorstehend erwähnt.

Phosphorverbindungen der "Oxidationsstufe" +1 sind z.B. Hypophosphite. Sie können Salzcharakter haben oder rein organischer Natur sein. Beispiele sind Calciumhypophosphit und Magnesiumhypophosphit, daneben auch Doppelhypophosphite oder komplexe Hypophosphite, oder organische Hypophosphite, wie Cellulosehypophosphitester, Ester der hypophosphorigen Säuren mit Diolen, wie z.B. von 1,10-Dodecyldiol. Auch substituierte Phosphinsäuren und deren Anhydride, wie z.B. Diphenylphosphinsäure, können eingesetzt werden. Auch Melaminhypophosphit ist geeignet. Des weiteren kommen in Frage Diphenylphosphinsäure, Di-p-Tolylphosphinsäure, Di-Kresylphosphinsäureanhydrid, Es kommen aber auch Verbindungen wie Hydrochinon-, Ethylenglykol-, Propylenglykol-bis(diphenylphosphinsäure)ester u.a. in Frage. Ferner sind geeignet Aryl(Alkyl)phosphinsäureamide, wie z.B. Diphenylphosphinsäuredimethylamid und Sulfonamidoaryl(alkyl)phosphinsäurederivate, wie z.B. p-Tolylsulfonamidodiphenylphosphinsäure. Bevorzugt eingesetzt werden Hydrochinon- und Ethylenglykol-bis-(diphenylphosphinsäure)ester und das Bisdiphenylphosphinat des Hydrochinons.

Phosphorverbindungen der Oxidationsstufe +3 leiten sich von der phosphorigen Säure ab. Geeignet sind cyclische Phosphonate, die sich vom Pentaerythrit, Neopentylglykol oder Brenzkatechin ableiten. Ferner ist Phosphor der Wertigkeitsstufe +3 in Triaryl(alkyl)phosphiten, wie z.B. Triphenylphosphit, Tris (4-decylphenyl)phosphit, Tris (2,4-di-tert.-butylphenyl)phosphit oder Phenyldidecylphosphit u.a. enthalten. Es kommen aber auch Diphosphite, wie z.B. Propylenglykol-1,2-bis(diphosphit) oder cyclische Phosphite, die sich vom Pentaerythrit, Neopentylglykol oder Brenzkatechin ableiten, in Frage.

Besonders bevorzugt werden Methylneopentylglykolphosphonat (Methanphosphonsäuremethylester) und -phosphit sowie Dimethylpentaerythritdiphosphonat und -phosphit.

Als Phosphorverbindungen der Oxidationsstufe +4 kommen vor allem Hypodiphosphate, wie z.B. Tetraphenylhypodiphosphat oder Bisneopentylhypodiphosphat in Betracht.

Als Phosphorverbindungen der Oxidationsstufe +5 kommen vor allem alkyl- und arylsubstituierte Phosphate in Betracht. Beispiele sind Phenylbisdodecylphosphat, Phenylethylhydrogenphosphat, Phenyl-bis(3,5,5-trimethylhexyl)phosphat, Ethyldiphenylphosphat, 2-Ethylhexyldi(tolyl)phosphat, Diphenylhydrogenphosphat, Bis (2-ethylhexyl)-p-tolylphosphat, Tritolylphosphat, Bis(2-ethylhexyl)-phenylphosphat, Di(nonyl)phenylphosphat, Phenylmethylhydrogenphosphat, Di(dodecyl)-p-tolylphosphat, p-Tolyl-bis(2,5,5-trimethylhexyl)phosphat oder 2-Ethylhexyldiphenylphosphat. Besonders geeignet sind Phosphorverbindungen, bei denen jeder Rest ein Aryloxi-Rest ist. Ganz besonders geeignet ist Triphenylphosphat.

Des weiteren können auch cyclische Phosphate eingesetzt werden. Besonders geeignet ist hierbei Diphenylpentaerythritdiphosphat und Phenylneopentylglykolphosphat.

Außer den oben angeführten niedermolekularen Phosphorverbindungen kommen noch oligomere und polymere Phosphorverbindungen in Frage.

Solche polymeren, halogenfreien organischen Phosphorverbindungen mit Phosphor in der Polymerkette entstehen beispielsweise bei der Herstellung von pentacyclischen, ungesättigten Phosphindihalogeniden, wie es beispielsweise in der DE-A 20 36 173 beschrieben ist. Das Molekulargewicht gemessen durch Dampfdruckosmometrie in Dimethylformamid, der Polyphospholinoxide soll im Bereich von 500 bis 7 000, vorzugsweise im Bereich von 700 bis 2 000 liegen.

Der Phosphor besitzt hierbei die Oxidationsstufe -1.

Ferner können anorganische Koordinationspolymere von Aryl(Alkyl)-phosphinsäuren wie z.B. Poly-ß-natrium (I)-methylphenylphosphinat eingesetzt werden. Ihre Herstellung wird in DE-A 31 40 520 angegeben. Der Phosphor besitzt die Oxidationszahl +1.

Weiterhin können solche halogenfreien polymeren Phosphorverbindungen durch die Reaktion eines Phosphonsäurechlorids, wie z.B. Phenyl-, Methyl-, Propyl-, Styryl- und Vinylphosphonsäuredichlorid mit bifunktionellen Phenolen, wie z.B. Hydrochinon, Resorcin, 2,3,5-Trimethylhydrochinon, Bisphenol-A, Tetramethylbisphenol-A oder entstehen.

Weitere halogenfreie polymere Phosphorverbindungen, die in den erfindungsgemäßen Formmassen enthalten sein können, werden durch Reaktion von Phosphoroxidtrichlorid oder Phosphorsäureesterdichloriden mit einem Gemisch aus mono-, bi- und trifunktionellen Phenolen und anderen Hydroxylgruppen tragenden Verbindungen hergestellt (vgl. Houben-Weyl-Müller, Thieme-Verlag Stuttgart, Organische Phosphorverbindungen Teil II (1963)). Ferner können polymere Phosphonate durch Umesterungsreaktionen von Phosphonsäureestern mit bifunktionellen Phenolen (vgl. DE-A 29 25 208) oder durch Reaktionen von Phosphonsäureestern mit Diaminen oder Diamiden oder Hydraziden (vgl. US-PS 4 403 075) hergestellt werden. In Frage kommt aber auch das an organische Poly(ammonium-phosphat).

Es können auch oligomere Pentaerythritphosphite, -phosphate und -phosphonate gemäß EP-B 8 486, z.B. Mobil Antiblaze® 19 (eingetragenes Warenzeichen der Firma Mobil Oil) verwendet werden.

Ganz besonders bevorzugt zum Einsatz gelangen Triphenylphosphinoxid, Triphenylphosphat, Hydrochinon-bis-(diphenylphosphinsäure)ester und Methylneopentylphosphat (Methanphosphonsäureneopentylester) sowie Mobil Antiblaze 19 sowie Resorcinoldiphosphat, wobei diese Verbindungen allein oder in beliebigen Mischungsverhältnissen zugesetzt werden können.

Weitere bevorzugte Flammschutzmittel sind Melamin (Formel I) und Melamincyanurat, wobei letzteres ein Reaktionsprodukt aus vorzugsweise äquimolaren Mengen von Melamin und Cyanursäure bzw. Isocyanursäure (Formeln IIa und IIb) ist.

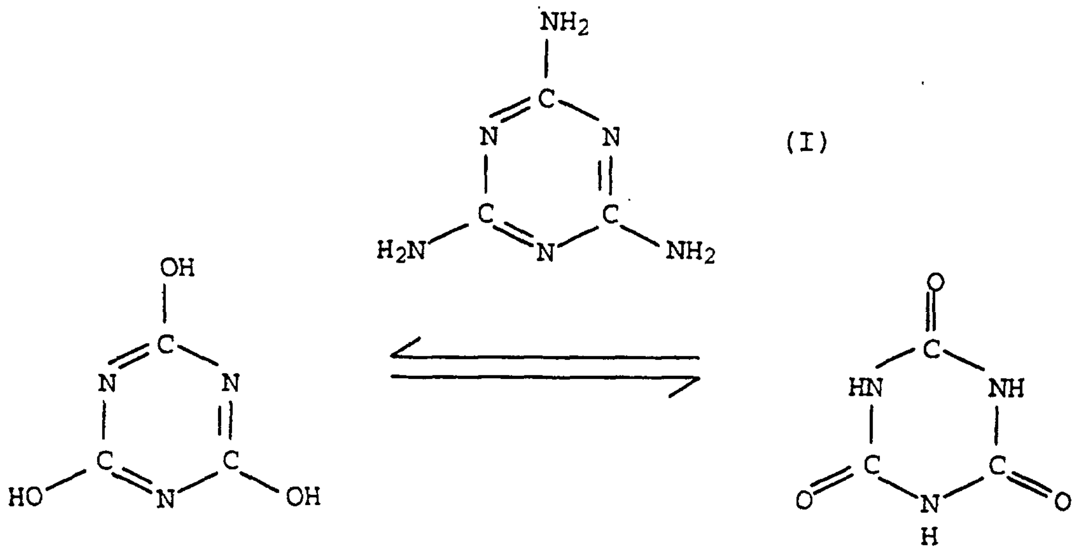

(I)

(IIa)
Enolform

(IIb)
Ketoform

Man erhält es z.B. durch Umsetzung von wäßrigen Lösungen der Ausgangsverbindungen bei 90 bis 100°C. Das im Handel erhältliche Produkt ist ein weißes Pulver mit einer mittleren Korngröße $d_{50}$ von 1,5 bis 2,5 μm.

Darüber hinaus sind Melaminoxalat, Melaminphosphat, Melaminborat oder Melaminstearat als Komponente C) geeignet.

Es können auch Mischungen der o.g. Triazinderivate eingesetzt werden, wobei das Mischungsverhältnis beliebig ist.

Weitere geeignete Flammschutzmittel sind Mischungen aus Metallcarbonaten von Metallen der 2. Hauptgruppe des Periodensystems.

Als besonders geeignet haben sich Mischungen aus

$c_1$) einem Magnesium-Calcium-Carbonat der allgemeinen
Formel $Mg_xCa_y(CO_3)_{x+y} \cdot m\ H_2O$,
wobei x und y Zahlen von 1 bis 5 bedeuten
und $x/y \geq 1$ gilt
und $m \geq 0$

und

$c_2$) einem basischen Magnesium-Carbonat der allgemeinen Formel
$Mg_n(CO_3)_v(OH)_{2n-2v} \cdot w\ H_2O$, wobei
n eine Zahl von 1 bis 6 bedeutet,
v eine Zahl größer als 0 und kleiner als 6
und $n/v > 1$ gilt
und $w \geq 0$

erwiesen, wobei das Mengenverhältnis von $c_1$):$c_2$) im Bereich von 1:1 bis 3:1 liegt.

Die Magnesium-Calcium-Carbonate $c_1$) können sowohl wasserhaltig als auch wasserfrei sein. Bevorzugt sind die natürlich vorkommenden Mineralien wie Dolomit und Huntit.

Besonders bevorzugt ist eine wasserfreie Form, in der x = 3 und y = 1 gilt, $Mg_3Ca(CO_3)_4$ (Huntit).

Die basischen Magnesiumcarbonate $c_2$) können ebenfalls sowohl in wasserhaltiger als auch wasserfreier Form eingesetzt werden. Auch hier sind die natürlich vorkommenden Mineralien wie Hydromagnesit, eine wasserhaltige Verbindung mit n = 5, v = 4 und w = 4, $Mg_5(CO_3)_4(OH)_2 \cdot 4\ H_2O$ bevorzugt.

Besonders bevorzugt liegt das Verhältnis von $c_1$):$c_2$) im Bereich von 1:1 bis 2:1.

Das Mischungsverhältnis der beiden Komponenten B) und C) ist in weiten Grenzen variabel. Bevorzugt sind Verhältnisse von 10 bis 70 Gew.-% Komponente B) mit 30 bis 90 Gew.-% Komponente C), bezogen auf das Gesamtgewicht der Komponenten B) und C).

Als Komponente D) können die erfindungsgemäßen Formmassen bis zu 70, insbesondere nicht mehr als 50

Gew.-% übliche Zusatzstoffe und Verarbeitungshilfsmittel enthalten.

Als Komponente D) können die erfindungsgemäßen Formmassen 1 bis 50, bevorzugt 5 bis 40 und insbesondere 10 bis 30 Gew.-% eines Füllstoffes enthalten.

Als bevorzugte faserförmige Füllstoffe seien Kohlenstoffasern, Aramid-Fasern und Kaliumtitanat-Fasern genannt, wobei Glasfasern als E-Glas besonders bevorzugt sind. Diese können als Rovings oder Schnittglas in den handelsüblichen Formen eingesetzt werden.

Die faserförmigen Füllstoffe können zur besseren Verträglichkeit mit dem Thermoplasten mit einer Silanverbindung oberflächlich vorbehandelt sein.

Geeignet sind auch nadelförmige mineralische Füllstoffe.

Unter nadelförmigen mineralischen Füllstoffen wird im Sinne der Erfindung ein mineralischer Füllstoff mit stark ausgeprägtem nadelförmigen Charakter verstanden. Als Beispiel sei nadelförmiger Wollastonit genannt. Vorzugsweise weist das Mineral ein L/D- (Länge Durchmesser)-Verhältnis von 8 : 1 bis 35 : 1, bevorzugt von 8 : 1 bis 11 : 1 auf. Der mineralische Füllstoff kann gegebenenfalls mit den vorstehend genannten Silanverbindungen vorbehandelt sein; die Vorbehandlung ist jedoch nicht unbedingt erforderlich.

Als weitere Füllstoffe seien Kaolin, calciniertes Kaolin, Wollastonit, Talkum und Kreide genannt.

Als weitere Zusatzstoffe und Verarbeitungshilfsmittel seien in Mengen von 0 bis 2 Gew.-% fluorhaltige Ethylenpolymerisate genannt. Hierbei handelt es sich um Polymerisate des Ethylens mit einem Fluorgehalt von 55 bis 76 Gew.-%, vorzugsweise 70 bis 76 Gew.-%.

Beispiele hierfür sind Polytetrafluorethylen (PTFE), Tetrafluorethylen-Copolymere oder Tetrafluorethylen-Copolymerisate mit kleineren Anteilen (in der Regel bis zu 50 Gew.-%) copolymerisierbarer ethylenisch ungesättigter Monomerer. Diese werden z.B. von Schildknecht in "Vinyl and Related Polymers". Wiley-Verlag, 1952, Seiten 484 bis 494, und von Wall in "Fluorpolymers" (Wiley Interscience, 1972) beschrieben.

Diese fluorhaltigen Ethylenpolymerisate liegen homogen verteilt in den Formmassen vor und weisen bevorzugt eine Teilchengröße $d_{50}$ (Zahlenmittelwert) im Bereich von 0,05 bis 10 µm, insbesondere von 0,1 bis 5 µm auf. Diese geringen Teilchengrößen lassen sich besonders bevorzugt durch Verwendung von wäßrigen Dispersionen von fluorhaltigen Ethylenpolymerisaten und deren Einarbeitung z.B. in eine Polyesterschmelze erzielen.

Als Zusatzstoffe seien Schlagzähmodifier genannt (auch als kautschukelastische Polymerisate oder Elastomere bezeichnet), die in Mengen bis zu 20 Gew.-%, bevorzugt bis zu 15 Gew.-% enthalten sein können.

Geeignet sind übliche Kautschuke, z. B. Ethylencopolymere mit reaktiven Gruppen, Acrylatkautschuk und Polymerisate konjugierter Diene, wie Polybutadienkautschuk und Polyisoprenkautschuk. Die Dienpolymerisate können, in an sich bekannter Weise, teilweise oder vollständig hydriert sein. Außerdem kommen z. B. in Betracht: hydrierter Styrolbutadienkautschuk, Ethylen-Propylen-Dien-Kautschuk, Polybutylen- und Polyoctenamerkautschuke, Ionomere, Blockcopolymere aus vinylaromatischen Monomeren mit Dienen wie Butadien oder Isopren (an sich bekannt aus EP-A 62 282) mit dem Aufbau $M^1M^2$-, $M^1M^2M^1M^2$- oder $M^1M^2M^1$-, wobei diese Blockpolymerisate auch Segmente mit statistischer Verteilung enthalten können, sowie Stern-Block-Copolymere. Als besonders geeignet haben sich Polymerisate konjugierter Diene wie Polybutadienkautschuk oder Polyisoprenkautschuk erwiesen. Derartige synthetische Kautschuke sind dem Fachmann geläufig und zusammenfassen in "Ullmanns Encyklopädie der Technischen Chemie", 4. Auflage, Bd. 13, Seiten 595 bis 634, Verlag Chemie GmbH, Weinheim 1977, beschrieben.

Als Zusatzstoffe seien genannt Hitze- und Lichtstabilisatoren, Gleit- und Entformungsmittel, Färbemittel, wie Farbstoffe und Pigmente in üblichen Mengen.

Weiter seien Ester oder Amide aus mindestens einem Alkohol oder Amin mit mindestens drei funktionellen Gruppen und einer oder mehrerer Mono- oder Dicarbonsäuren mit 5 bis 34 C-Atomen genannt, wobei Pentaerythritoltetrastearat bevorzugt ist, bzw. Salze des Mg, Ca, Zn mit Carbonsäuren bis zu 34 C-Atomen, insbesondere Calciumstearat.

Über Art und Menge dieser Zusatzstoffe lassen sich die gewünschten Eigenschaften der Endprodukte in weitem Maße steuern.

Die Herstellung der erfindungsgemäßen Formmassen kann nach an sich bekannten Verfahren erfolgen. Nach einer bevorzugten Ausführungsform erfolgt die Herstellung durch Zugabe der Komponenten B) sowie C), zur Schmelze der Komponente A).

Zweckmäßigerweise verwendet man hierzu Extruder, z.B. Einschnecken- oder Zweischneckenextruder oder andere herkömmliche Plastifizierungsvorrichtungen wie Brabender-Mühlen oder Banbury-Mühlen.

Die Kunststoffmischungen kann man bei Anwesenheit eines thermoplastischen Polykondensates danach einer weiteren thermischen Behandlung, d.h. einer Nachkondensation in fester Phase unterwerfen. In Temperaggregaten wie z.B. einem Taumler-Mischer oder kontinuierlich sowie diskontinuierlich betriebenen Temperrohren tempert man die in der jeweiligen Bearbeitungsform vorliegende Formmasse, bis die gewünschte Viskositätszahl VZ oder relative Viskosität ηrel z.B. des Polyamids erreicht wird. Der Temperaturbereich der Temperung hängt vom Schmelzpunkt der reinen Komponente A) ab. Bevorzugte Temperaturbereiche sind 5 bis 50, vorzugsweise 20 bis 30°C unterhalb des jeweiligen Schmelzpunkts von A). Das Verfahren erfolgt vorzugsweise in einer Inertgasatmosphäre, wobei Stickstoff

und überhitzter Wasserdampf als Inertgase bevorzugt sind.

Die Verweilzeiten betragen im allgemeinen von 0,5 bis 50, vorzugsweise 4 bis 20 Stunden. Anschließend werden aus den Formmassen mittels üblicher Vorrichtungen Formteile hergestellt.

Die erfindungsgemäßen Formmassen zeichnen sich durch eine gute Verarbeitbarkeit sowie durch eine gute Flammfestigkeit insbesondere kein brennendes Abtropfen aus. Darüber hinaus bleiben die mechanischen Eigenschaften selbst bei der Anwesenheit einer Phosphorverbindung weitestgehend erhalten. Deshalb eignen sie sich zur Herstellung von Fasern, Folien und Formkörpern jeglicher Art, welche insbesondere im Elektrobereich sowie Elektronikindustrie verwendet werden, z.B. Lampenteile wie Lampenfassungen und -halterungen, Stecker und Steckerleisten, Spülenkörper, Gehäuse für Kondensatoren oder Schaltschütze sowie Sicherungsschalter, Relaisgehäuse und Reflektoren sowie Abdeckungen, Computergehäuse und Schalterteile.

Beispiele

Es wurden folgende Komponenten eingesetzt:

Komponente A)

A/1: Polyamid 6 mit einer VZ von 151 ml/g, gemessen in 96 %iger $H_2SO_4$ als 0,5 gew.-%ige Lösung (Ultramid® B3 der BASF AG).

A/2: Polybutylenterephthalat mit einer VZ von 130 ml/g, gemessen in Phenol/Dichlorbenzol (1:1) (Ultradur B® 4500 der BASF AG). der BASF AG.

Komponente B

Herstellvorschrift der E-AS-Copolymere

Die Copolymerisation von Ethylen und Acrylsäure wurden in einem kontinuierlich betriebenen Rührautoklaven mit 1 l Innenvolumen durchgeführt. Dabei betrug der Reaktionsdruck 1 500 bar und die mittels zudosiertem Peroxid eingestellte Reaktionstemperatur 220°C. Der Ethylendurchsatz lag im Durchschnitt bei 10 kg/h. Dabei wurde als Radikalbildner ein Gemisch aus t-Butylperpivalat und t-Butylperisononanoat im Molverhältnis 1:1, gelöst in Isododecan, verwendet. Als Molekulargewichtsregler wurde Propionaldehyd verwendet, der dem Gasgemisch zudosiert wurde. Die in der nachstehenden Tabelle angegebenen Peroxidmengen beziehen sich auf die gesamten Monomere in mol-ppm.

| Bez. | $M_n$ [g/mol] | AS-Gehalt | Propionaldehyd [Gew.-%] | Peroxid [mol-ppm] | MFI [g/10 min] |
|---|---|---|---|---|---|
| B/1 | 70 000 | 21 | 2,0 | 41 | 10,1 |
| B/2 | 59 000 | 30 | 0,4 | 59 | 15,2 |

B/1V: PE/7 AS $M_n$: 12 000 (GPC bestimmt), MFI: 330 g/10 min.

B/2V: PE/7 AS $M_n$: 190 000 (Lucalen® A 3710 der BASF AG), MFI: < 0,1 g/10 min.

B/3V: Ein oxidiertes Polyethylen niedriger Dichte (LDPE), end-gruppencarboxyliert mit ca. 4 bis 5 COOH-Gruppen pro Molekül und einem Molekulargewicht $M_n$ (Zahlenmittel) von ca. 15 000 (Hoechst-Wachs® PED 191 der Hoechst AG). MFI: 150 g/10 min.

Der MFI wurde gemäß DIN 53 735 bei 160°C und 0,325 kg Belastung bestimmt. Das Molekulargewicht durch GPC mittels HDPE-Standard.

C/1: TPPO

C/2: Melamincyanurat mit einer mittleren Teilchengröße von 1,5 µm.

C/3: Magnesiumhydroxid aminosilanisiert (Magnifin® H10B, Martinswerke GmbH)

D: Silanisierte Schnittglasfaser mit einer Dicke von 10 μm.

Herstellung der thermoplastischen Formmassen

Die Komponenten A) bis D) wurden in dem der Tabelle zu entnehmenden Mengenverhältnis auf einer ZSK 25 bei 260°C mit 5 kg/h und einer Umdrehungszahl von 120 $min^{-1}$ extrudiert, der Strang im Wasserbad gekühlt und anschließend granuliert und bei 80°C im Vakuum 10 h getrocknet.
Die Schnittglasfaser wurde in den Schmelzestrom dosiert.

Vergleichsbeispiel 12V (gemäß DE-A 42 16 042)

Ein Polyamid-Präpolymeres (Komponente $A^*$)), hergestellt nach dem in der EP-A 129 195 beschriebenen Verfahren, mit einer VZ von 58 ml/g wurde als Schmelze mittels einer Austragungsschnecke aus dem Abscheidegefäß der Polykondensationsanlage in einen Doppelschneckenextruder (ZSK 53 von Werner & Pfleiderer) eingebracht und mit Komponente B/3V bei 260°C gemischt. Anschließend wurde durch Anlegen von Vakuum entgast, wobei praktisch keine Nachkondensation eintrat. Das Produkt wurde als Strang ausgetragen, gekühlt, granuliert und mit überhitztem Wasserdampf bei 180°C und einer Verweilzeit von 11 h nachkondensiert. Die Viskosität lag bei 150 ml/g nach der Nachkondensation.
Für den Brandtest wurden Stäbe abgespritzt und nach üblicher Konditionierung entsprechend UL 94 geprüft.
Die Ergebnisse der Messungen und die Zusammensetzungen der Formmassen sind der Tabelle zu entnehmen.

Tabelle

| Beispiel | Zusammensetzung [Gew.-%] | | | | Ul 94 [1/16'] | Brennendes Abtropfen |
|---|---|---|---|---|---|---|
| 1 | 75 A/1 | 10 B/1 | 20 C/1 | - | V-0 | nein |
| 2 | 78 A/1 | 5 B/2 | 20 C/1 | - | V-0 | nein |
| 3 | 50 A/1 | 5 B/1 | 20 C/1 | 25 D | V-0 | nein |
| 4V | 55 A/1 | - | 20 C/1 | 25 D | V-2 | ja |
| 5V | 50 A/1 | 5 B/1V | 20 C/1 | 25 D | V-2 | ja |
| 6V | 50 A/1 | 5 B/2V | 20 C/1 | 25 D | V-2 | ja |
| 7 | 55 A/1 | 5 B/1 | 15 C/2 | 25 D | V-0 | nein |
| 8V | 55 A/1 | - | 20 C/2 | 25 D | V-2 | ja |
| 9 | 55 A/1 | 5 B/1 | 40 C/3 | - | V-0 | nein |
| 10V | 55 A/1 | - | 45 C/3 | - | V-2 | ja |
| 11V | 98 A/1 | 2 B/3V | - | - | V-2 | ja |
| 12V | 98 A* | 2 B/3V | - | - | V-2 | ja |
| 13 | 50 A/2 | 5 B/1 | 20 C/1 | 25 D | V-0 | nein |
| 14V | 50 A/2 | - | 25 C/1 | 25 D | V-2 | ja |

## Patentansprüche

1. Thermoplastische Formmassen enthaltend

    A) 10 bis 90 Gew.-% mindestens eines thermoplastischen Polymeren, verschieden von B),

    B) 1 bis 20 Gew.-% eines carboxylgruppenhaltigen Polyethylens mit einem mittleren Molekulargewicht $M_n$ (Zahlenmittel) von 24 000 bis 100 000 g/mol,

    C) 5 bis 60 Gew.-% eines halogenfreien Flammschutzmittels

    D) 0 bis 70 Gew.-% weiterer Zusatzstoffe und Verarbeitungshilfsmittel,

    wobei die Summe der Gewichtsprozente der Komponenten A) bis D) 100 % ergibt.

2. Thermoplastische Formmassen nach Anspruch 1, enthaltend Polymere A) ausgewählt aus der Gruppe der Polyester, Polyamide, Polycarbonate, Polyphenylenether, vinylaromatischen Polymeren, oder deren Mischungen.

3. Thermoplastische Formmassen nach den Ansprüchen 1 oder 2, enthaltend als Komponente B) ein Copolymer aus Ethylen und einer α,β-ungesättigten Carbonsäure der allgemeinen Formel I

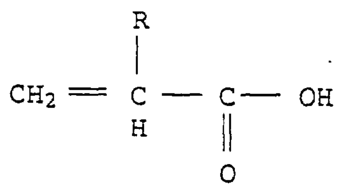
I

    wobei R Wasserstoff oder einen Alkylrest mit 1 bis 5 C-Atomen bedeutet.

4. Thermoplastische Formmassen nach den Ansprüchen 1 bis 3, in denen die Komponente B) einen Melt flow Index (MFI) von 1 bis 100 g/10 min bei 160°C/0,325 kg gemäß DIN 53 735 aufweist.

5. Thermoplastische Formmassen nach den Ansprüchen 1 bis 4, in denen die Komponente B), aus

    10 bis 50 Gew.-% carboxylgruppenhaltigen Verbindungen und
    50 bis 90 Gew.-% Ethylen
    50 bis 90 Gew.-% Ethylen

    aufgebaut ist.

6. Thermoplastische Formmassen nach den Ansprüchen 1 bis 5, in denen die Komponente C) ausgewählt ist aus der Gruppe der Magnesiumhydroxide, Phosphor, phosphorhaltigen Verbindungen, Melamin, Melamincyanurat, Phosphor-Stickstoffverbindungen, Erdalkalicarbonaten oder deren Mischungen.

7. Thermoplastische Formmassen nach den Ansprüchen 1 bis 6, enthaltend als Komponente D) 1 bis 50 Gew.-% faserförmige Füllstoffe.

8. Verwendung der thermoplastischen Formmassen gemäss den Ansprüchen 1 bis 7 zur Herstellung von Fasern Folien und Formkörper.

9. Formkörper erhältlich aus den thermoplastischen Formmassen gemäss den Ansprüchen 1 bis 7.

## Claims

1. A thermoplastic molding composition comprising

A) from 10 to 90 % by weight of at least one thermoplastic polymer which is different from B),

B) from 1 to 20 % by weight of a polyethylene which contains carboxyl groups and has a mean molecular weight $M_n$ (number average) of from 24,000 to 100,000 g/mol,

C) from 5 to 60 % by weight of a halogen-free flame retardant

D) from 0 to 70 % by weight of other additives and processing aids,

where the total of the percentages by weight of components A) to D) is 100 %.

**2.** A thermoplastic molding composition as claimed in claim 1 containing polymers A) selected from the group consisting of the polyesters, polyamides, polycarbonates, polyphenylene ethers, vinylaromatic polymers and mixtures of these.

**3.** A thermoplastic molding composition as claimed in claim 1 or 2 containing, as component B), a copolymer of ethylene and an α,β-unsaturated carboxylic acid of the formula I

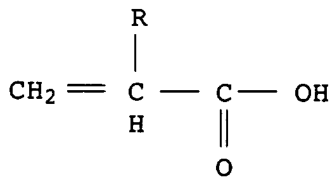

I

where R is hydrogen or alkyl having from 1 to 5 carbon atoms.

**4.** A thermoplastic molding composition as claimed in any of claims 1 to 3, in which component B) has a melt flow index (MFI) of from 1 to 100 g/10 min at 160°C/0.325 kg according to DIN 53 735.

**5.** A thermoplastic molding composition as claimed in any of claims 1 to 4, in which component B) is built up from

from 10 to 50 % by weight of compounds which contain carboxyl groups and
from 50 to 90 % by weight of ethylene.

**6.** A thermoplastic molding composition as claimed in any of claims 1 to 5, in which component C) is selected from the group consisting of the magnesium hydroxides, phosphorus, phosphorus-containing compounds, melamine, melamine cyanurate, phosphorus-nitrogen compounds or carbonates of alkaline earth metals or mixtures of these.

**7.** A thermoplastic molding composition as claimed in any of claims 1 to 6, containing, as component D), from 1 to 50 % by weight of fibrous fillers.

**8.** Use of a thermoplastic molding composition as claimed in any of claims 1 to 7 to produce fibers, films or shaped articles.

**9.** A shaped article obtainable from a thermoplastic molding composition as claimed in any of claims 1 to 7.

## Revendications

**1.** Masses de moulage thermoplastiques, contenant:

A) 10 à 90% en poids d'au moins un polymère thermoplastique différent de B),
B) 1 à 20% en poids d'un polyéthylène contenant des radicaux carboxyle et d'un poids moléculaire moyen $M_n$ (moyenne numérique) de 24 000 à 100 000 g/mole,
C) 5 à 60% en poids d'un agent ignifuge exempt d'halogène,
D) 0 à 70% en poids d'autres additifs et adjuvants de traitement,

la somme des pourcentages en poids des composants A) à D) totalisant 100%.

2. Masses de moulage thermoplastiques selon la revendication 1, contenant des polymères A) choisis dans le groupe des polyesters, polyamides, polycarbonates, poly(éthers de phénylène), polymères vinylaromatiques, ou leurs mélanges.

3. Masses de moulage thermoplastiques selon l'une des revendications 1 ou 2, contenant comme composant B) un copolymère d'éthylène et d'un acide carboxylique α,β-insaturé de la formule générale I

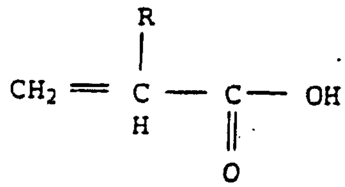

dans laquelle R représente de l'hydrogène ou un radical alkyle comportant de 1 à 5 atomes de carbone.

4. Masses de moulage thermoplastiques selon les revendications 1 à 3, dans lesquelles le composant B) présente un indice de fluidité MFI (Melt Flow Index) de 1 à 100 g/10 min. à 165°C/0,325 kg selon DIN 53 735.

5. Masses de moulage thermoplastiques selon les revendications 1 à 4, dans lesquelles le composant B) est constitué de 10 à 50% en poids de composés contenant des radicaux carboxyle et 50 à 90% en poids d'éthylène.

6. Masses de moulage thermoplastiques selon les revendications 1 à 5, dans lesquelles le composant C) est choisi dans le groupe formé par l'hydroxyde de magnésium, le phosphore, des composés phosphorés, la mélamine, le cyanurate de mélamine, des composés de phosphore - azote, des carbonates de métaux alcalino-terreux, ou leurs mélanges.

7. Masses de moulage thermoplastiques selon les revendications 1 à 6, contenant comme composant D) de 1 à 50% en poids de charges fibreuses.

8. Utilisation des masses de moulage selon les revendications 1 à 7 pour la production de fibres, feuilles et corps façonnés.

9. Corps façonnés que l'on peut obtenir à partir des masses de moulage thermoplastiques selon les revendications 1 à 7.